# EUROPEAN PATENT SPECIFICATION

(11) **EP 2 839 992 B1**
(45) Date of publication and mention of the grant of the patent: **31.01.2018**
(21) Application number: 14002741.8
(22) Date of filing: 06.08.2014
(51) Int. Cl.: B60R 9/06, B60D 1/06

(54) **Carrier apparatus**
Trägervorrichtung
Appareil de support

(30) Priority: 06.08.2013 GB 201314017; 20.08.2013 GB 201314844
(43) Date of publication of application: 25.02.2015
(73) Proprietor: C P Witter Limited, Deeside Industrial Park Deeside Flintshire CH5 2NY (GB)
(72) Inventor: Dickinson, Martin, East Hunsbury, Northampton NN4 0RF (GB)
(74) Representative: Stoner, Gerard Patrick

(56) References cited:
- DE-B3- 10 251 395
- DE-C- 676 690
- US-A1- 2012 098 236

## Description

### BACKGROUND TO THE INVENTION

### 1 FIELD OF THE INVENTION

The present invention relates to a carrier apparatus which may be fitted to a vehicle for the purpose of carrying articles, such as bicycles, for example, Cycle carriers for use with domestic cars are well-known. Some carriers enable bicycles to be carried on a rack mounted to the roof of the vehicle; others enable mounting to a rack which is effectively suspended at the rear of the vehicle. A further genus of carrier makes use of the presence of a towbar on some vehicles by providing a rack which is mounted, via a suitable clamping device, to the ball of the towbar.

### 2 DESCRIPTION OF RELATED ART

One such clamping device for a rack is shown in WO2010/086368 and comprises an over-centre clamping device which operates to create very large clamping forces around the ball of the towbar by the application of relatively small forces to a lever operating the clamping device. A further over-centre clamping device, also lever-operated to enable operation by low manual forces is known from US 2011/0049208. Both of these clamping devices require careful adjustment to ensure that a sufficiently large clamping force is applied to the ball of the towbar to ensure that the rack attached to the clamping device Is securely attached while, at the same time, avoiding applying an excessively large force. Such adjustments are not trivial. GB1215272 discloses a clamping device for a bicycle carrier which clamps the towball of a vehicle and aims to provide automatic adjustment and, as a result, a consistent clamping force Document DE10251395 B3 discloses a clamping device for a trailer.

### SUMMARY OF THE INVENTION

In our earlier filed UK Patent application GB1314017,3, filed on 6^{th} August we disclosed an alternative clamping device for a carrier comprising:
a base which is to be clampable to a ball of a tow-bar on a vehicle;
first and second clamping cups mounted on the base in a manner permitting relative movement of the cups in at least a clamping direction thereby enabling:
   (a) the cups to engage with the ball and provide a clamping force to retain the base on the ball, and
   (b) the cups to disengage from the ball and enable removal of the base from the ball;
a cam which is pivotally mounted for rotation about a first axis between first and second positions In which, respectively, a surface on the cam is engaged and disengaged with one of the clamping cups;
a lever which is pivotally mounted to the base for rotation about a second axis whose location is fixed relative to one of the base and the first clamping cup;
   wherein
the first axis Is located on a bearing rotatable with the lever and eccentrically with respect to the second axis.

The present application discloses some modifications and corrects some errors in that prior UK patent application.

### BRIEF DESCRIPTION OF DRAWINGS

Fig. 1 is a schematic view of a of carrier according to an embodiment of the present Invention;
Fig. 2 is a perspective view of a carrier according to an embodiment of the present invention;
Fig.3 Is a side view of the carrier of Fig. 2;
Fig. 4 is a side view of a detail of Fig. 3;
Fig. 5 is a perspective view of elements of Fig. 4;

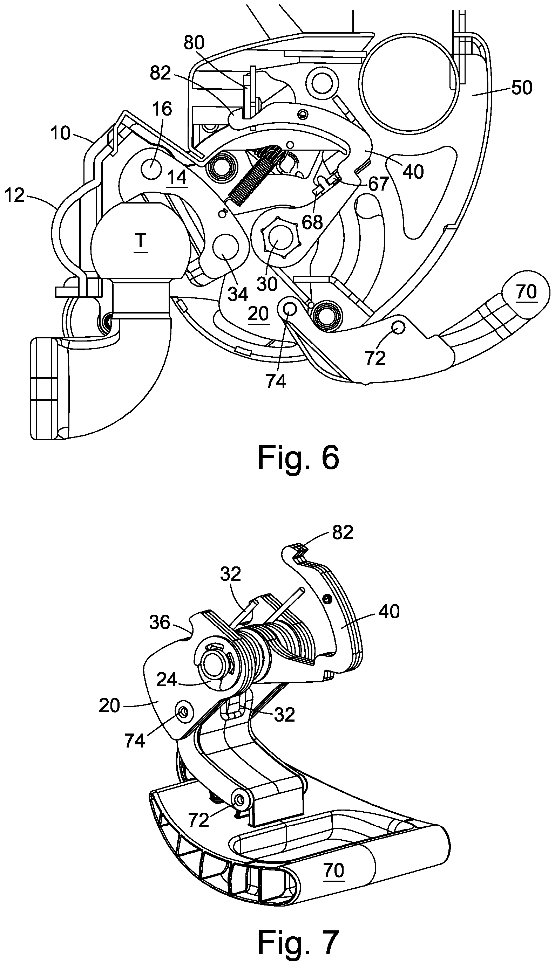

Fig. 6 is a view corresponding to Fig. 4 showing a tow ball in place;
Fig. 7 Is a perspective view of a part of the elements of Fig, 5;
Fig. 8 is a side view of the cam;
Fig. 9 is a side view corresponding to Figs. 4 and 6 showing the tow ball engaged by the clamping cups;
Fig. 10 is a detailed perspective view of the movable clamping cup;
Fig. 11 is a side view corresponding to Figs. 4, 6 and 9 showing the carrier clamped to the tow ball and in its lowered position;
Figs. 12 and 13 are perspective and side views respectively illustrating eccentric mounting of the cam;

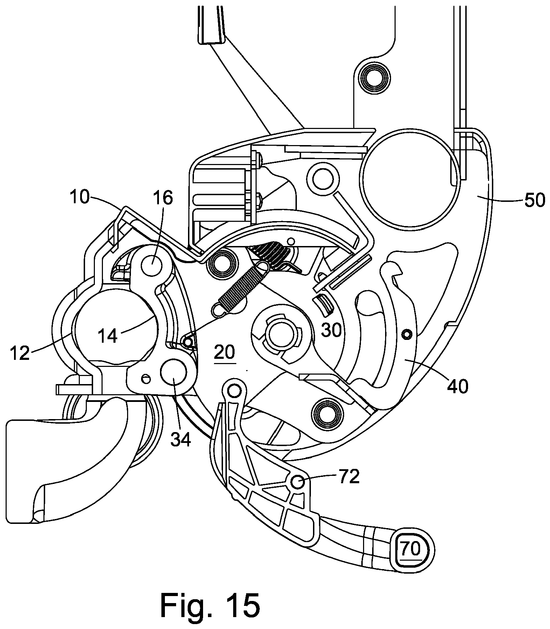

Figs. 14 and 15 are respectively, perspective and side views showing Independent rotation of the clamping lever and carrier; and
Fig. 16 shows the carrier apparatus clamped to the tow ball and in an upright storage position.

### DESCRIPTION OF THE PREFERRED EMBODIMENTS

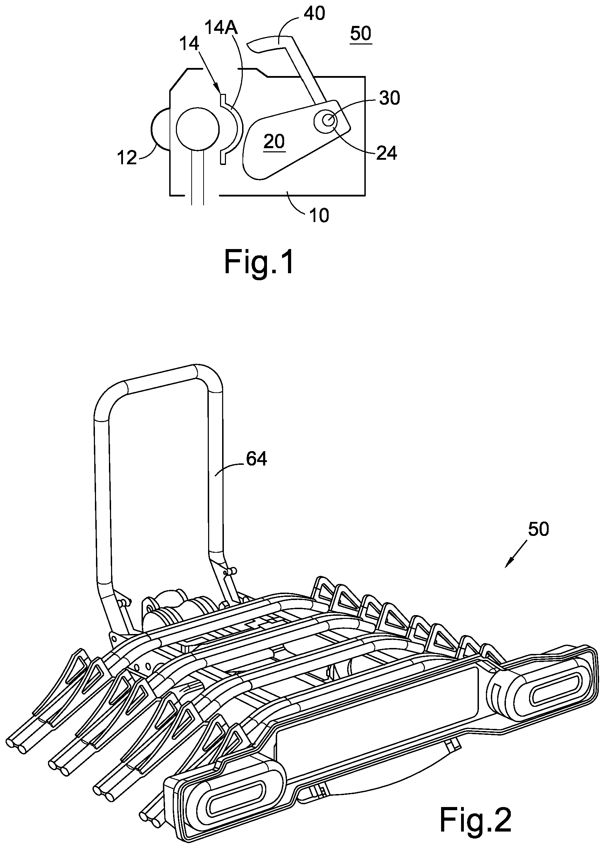

Referring now to Fig. 1, an embodiment of carrier for carrying Itemson a tow ball T of a vehicle (not shown) is illustrated schematically. In the present embodiment the carrier is a bicycle carrier, though this is not essential. The carrier comprises a base 10 which, when the carrier Is properly clamped to the tow ball T, is intended to remain effectively rigid with it (that is to say rigid within the context of what is required In order for it to carry bicycles and drive a vehicle to which the ball T is connected). When clamped to the ball T the base 10 carries the weight of the bicycles to be carried. Accordingly, clamping of the base 10 to the tow ball T will typically require a clamping force of sufficient magnitude to create whatever frictional force is required to overcome the moment applied to the base 10 by the weight of the bicycles which it then carries. The base 10 can be clamped to the ball T by means of two, relatively movable clamping cups 12, 14. The cups 12, 14 are relatively movable to permit Insertion of the ball T between them, clamping of the base 10 to the ball T by causing the cups 12, 14 to engage and apply a force to the ball T and, when desired, disengagement of the clamping force and removal of the ball T. Thus, it is, from the point of view of the engagement, clamping, unclamping and disengagement of the ball T with the cups 12, 14, unimportant whether both cups are movable relative to the base 10, or merely one of them; merely that the cups 12, 14 are movable relative to each other.

In the present embodiment, a fixed cup 12 is fixedly connected to the base 10 and a movable cup 14 is mounted to the base 10 In a manner enabling it to rotate into and out of engagement with the ball T and which will be described subsequently in more detail. The movable cup 14 is urged Into engagement with the ball T by a cam 20. The cam 20 is journalled for rotation relative to the base about a first axis A1 on a bearing 24 and has a cam surface 22 whose curvature is eccentric with respect to the axis A1. The cam 20 is biased Into anticlockwise rotation about the bearing 24 (not shown In Fig. 1) thereby to bias the cam surface 22 into engagement with the movable cup 14 and, in turn the movable and fixed cups 14, 12 into engagement with the ball T. Because of the eccentricity of the curvature of the cam surface 22 relative to the first axis A1, rotation of the cam 20 about the first axis A1 causes progressively increasing force to be applied by the cam surface to the movable cup 14.

The bearing 24 about which the cam 20 is mounted for rotation relative to the base 10 is eccentrically mounted on and rotates with an axle 30; axle 30 is mounted on and journalled for rotation relative to the base about a second axis A2 whose position is fixed relative to the base 10 (though where both clamping cups are movable relative to the base the axle 30 is preferably journalled in a position fixed relative to the clamping cup 12). Accordingly, the axle 30 rotates relative to the base 10 about a fixed axis whereas the centre of bearing 24, by virtue of its eccentric mounting on axle 30, executes an orbital trajectory relative to the base 10. The radius of the orbital trajectory will correspond to the degree of eccentricity of mounting of the bearing 24 on axle 30. Because the cam 20 is journalled on bearing 24, the cam 20 will likewise execute such an orbital trajectory relative to the base 10. A clamping lever 40 is fixedly mounted on the axle 30 so that rotation of the lever 40 causes rotation of the axle 30, translation of the bearing and, consequently, the application of a clamping force to the movable cup 14 by the cam 20 (which In turn causes the application of a clamping force by the cups 12, 14 to the ball T), Thus an initial engagement force is applied by the cam bias to urge the movable cup into engagement with the ball T and a clamping force is then applied by the cam 20 to the cup 14 by rotation of the lever translating the cam axis A1.

The geometry of the cam surface and relative pivot locations is chosen such that any directly anti-clockwise, or 'outward' pivoting force on the movable cup 14 (i.e. a force on the movable cup acting to urge it out of engagement with the ball T) will merely increase the friction between the cam surface 22 and the rear face of the movable cup 14 and therefore operate to increase the (frictional) force which causes the cam surface 22 and movable cup 14 to remain in clamped engagement rather than to facilitate disengagement of the cam surface 22 and movable cup 14. This Is because any forces which urge the movable cup 14 back against the cam surface 22 are acting transversely to the frictional forces which they produce between the cam surface 22 and rear face 14A of the cup; and those frictional forces operate to retain the cam 20 in place.

Clamping of the base 10 to the ball 10 takes place as follows. The ball T Is Inserted between the cups 12, 14 in their disengaged positions. The cam 20 Is then allowed, by virtue of its biasing, to apply an initial force to the movable cup 14 which effectively biases the cups 12, 14 into engagement with the ball T. Once that initial engagement force has been applied to the ball T by the cups 12, 14, the lever 40 is then rotated.

Rotation of the lever 40 and therefore axle 30 results in a relatively small translation of the bearing 24 relative to the base 10 and, because it is Journalled on the bearing 24, a corresponding translation of the cam 20. This relatively small translation of the cam 20 is sufficient to cause the force applied by it to the movable cup 14 to increase to such a significant degree that a full clamping force is then applied by the cups 12, 14 which is sufficient to enable bicycles to be carried upon the base 10.

The bicycles are carried on a rack 50 which is also mounted for rotation relative to the base 10 about axle 30. The mounting of the rack 50 on axle 30 is, however, undertaken In such a manner that the rack 50 and lever 40 may rotate independently of each other. Preferably, clockwise rotation of the rack 50 can cause rotation of the lever 40 to create a clamping force; but anti-clockwise rotation of the rack 50 can occur Independently of the lever 40 thereby permitting the base 10 to remain clamped to the ball T but the rack to be elevated for convenient storage when no bikes are being carried.

Because the size of the ball T will vary to some degree from vehicle to vehicle, the clamping force will preferably be adjustable. In the present embodiment this Is achieved by the bias applied to the rotation of the cam 20 which will urge the movable cup 14 to rotate into engagement with the ball T until the reaction force from that initial engagement prevents further rotation of the cam 20 under the influence of the bias. Thus, at the point where the clamping force Is applied by rotation of the lever 40, the force of engagement of the ball T by the cups 12, 14 will be substantially the same for all ball sizes, thereby providing automated adjustment.

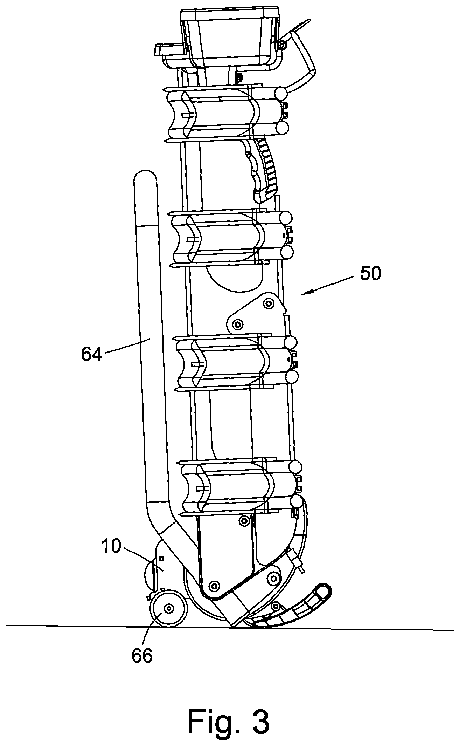

Details of the construction and operation of embodiments of the invention will now be described. Referring now to Figs. 2 and 3, the carrier includes a rack 50 pivotally mounted to the base 10. The rack 50 carries four ribs 60, each of which is adapted to support the wheels of a bicycle. A bicycle whose wheels rest in one of the ribs is then supported upright by stanchions (not shown) which extend from an upright frame 64. The rack 50 may be tilted Into an upright position as shown in Fig. 3 both when the carrier is connected to a tow ball T but bicycles have been removed from it (for example to save on parking space required) and also when disconnected. Wheels 66, mounted on the base 10, permit easy transportation of the carrier when disconnected.

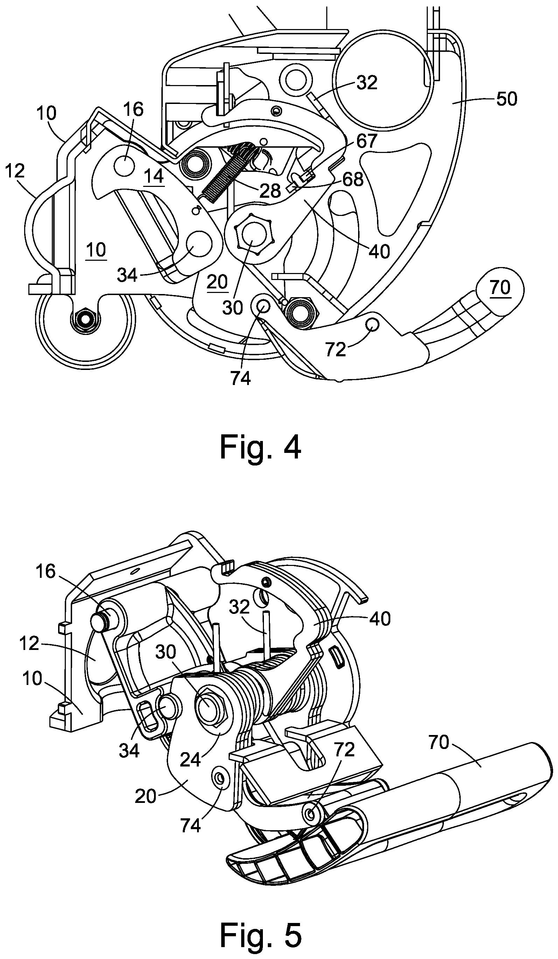

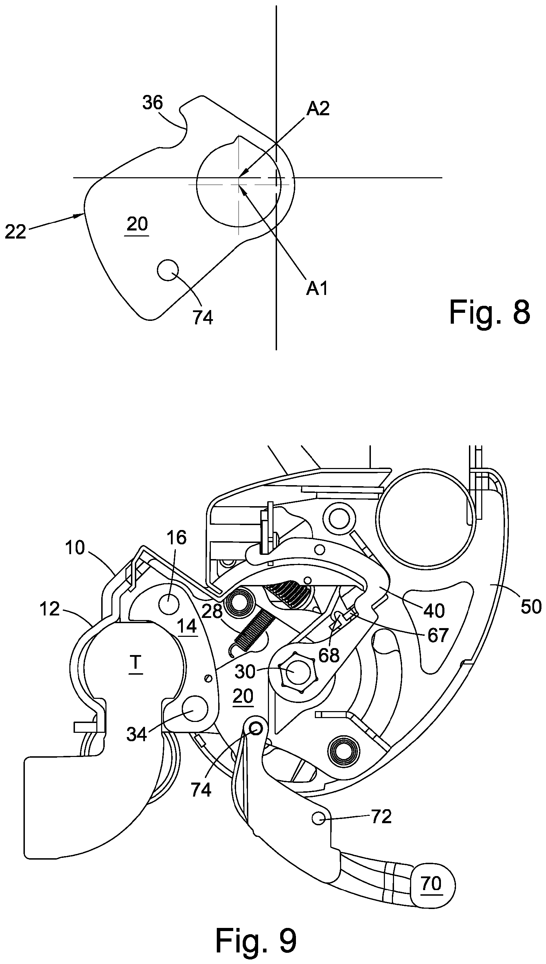

Referring now additionally to Figs.4 and 5, the fixed cup 12 is formed integrally with a part of the base 10 and includes a dished part 12A and a cylindrical neck 12B through which, in use, the stem on which the ball T is mounted will project. The movable cup 14 is mounted on the base for rotation about a pivot 16 provided by the bushing of spigots 18 within the side plates 26 of the base 10. The movable cup 12 is biased to pivot Into a disengaged position and, in the present embodiment, the biasing is provided by means of a tension spring 28. The cam 20 is mounted for rotation about bearing 24 which defines a first axis A1. As mentioned previously, the bearing 24 is fixedly mounted upon an axle 30 which is journalled for rotation relative to the base 10 about a second axis A2 (the geometry of which is shown in more detail in Fig. 8). The cam 20 is biased to rotate about the first axis A1 by means of a cam bias provided, in the present embodiment, by means of a coiled wire spring 32 which is coiled about the axle 30 and bears at one end against the cam 20 and at the other against the base 10. Accordingly, the bias on the cam 20 operates to cause the cam 20 to bear against a lug or barrel 34 mounted within a corresponding recess in the lower, pivoting part of the rear face of the movable cup 14 (and mounted substantially parallel with the pivot 16). That biasing of the cam 20 urges the movable cup 14 to pivot Into engagement with the ball T; whereas the tension spring biases the cup 14 In the opposing sense. An equilibrium In which the movable cup 14 is retained in disgengagement is achieved by means of a detent provided by the barrel 34 bearing against a recess 36 In the cam 20. The angle of the recess 36 is such that, when the barrel 34 and recess 36 are engaged, the upward force applied by the barrel 34 to the recess (by virtue of the biasing spring 28 causing the movable cup 14 to pivot anticlockwise) is orthogonal to the reaction force applied to the barrel 34 by the recess 36 and the biased clockwise rotation of the cam 20.

Referring now to Fig. 5, as the ball T is offered into the cavity between the two cups 12, 14, the top of the ball T will bear against an inwardly projecting lip 38 at the upper part of the movable cup 14. The lip acts, under the influence of the force applied by the ball T, as a lever which applies a rotational force to cause the movable cup 14 to rotate anti-clockwise about the pivot 16. Once this rotation starts to occur it causes slight disengagement of the detent provided by the barrel 34 and recess 36; that disengagement is then sufficient to permit the action of the cam 20 under the influence of the wire biasing spring 32 to rotate clockwise and start to bear against the barrel 34, thereby to urge the movable cup 14 to rotate clockwise about the pivot 16 until it comes into contact with the ball T. The movable cup 14 will continue to rotate into engagement with the ball T until the reaction force applied by the ball T Is equal to and opposite to the initial engagement force applied to the movable cup 14 by cam 20, as illustrated in Fig. 9.

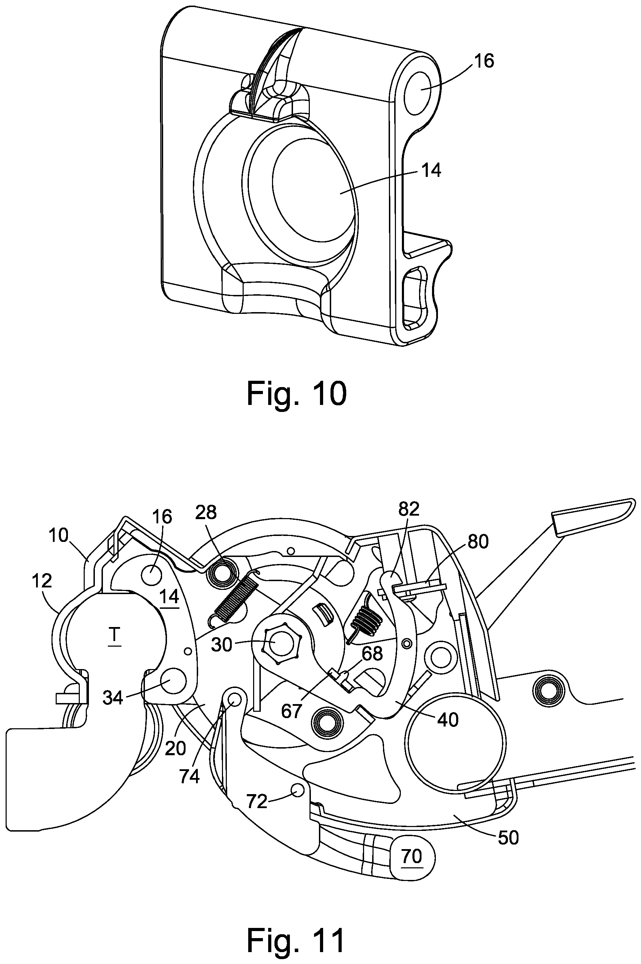

Once the cups 12, 14 have engaged the ball T with the initial engagement force provided by the spring bias 32 acting on the cam 20 which in turn acts on the barrel 34, the clamping lever 40 is then rotated to apply a full clamping force to the movable cup 14, by virtue of translation of the bearing 24 as described and explained above. Referring now to Fig. 11, rotation of the clamping lever 40 Is achieved by rotation of the rack 50 about the axle 30. Rotation of the rack 50 causes a bearing plate 67 which extends between the side panels (not shown) of the rack 50 to bear, via rubber lugs 68, against the clamping lever 40 and thereby to rotate the clamping lever 40 to cause the cam 20 to apply the clamping force. It is a feature of the present embodiment that any rotation of the movable cup 14 in an anti-clockwise direction, i.e. a direction which it is required to rotate in in order to disengage from the ball T, increases the frictional force which causes it to remain clamped in place.

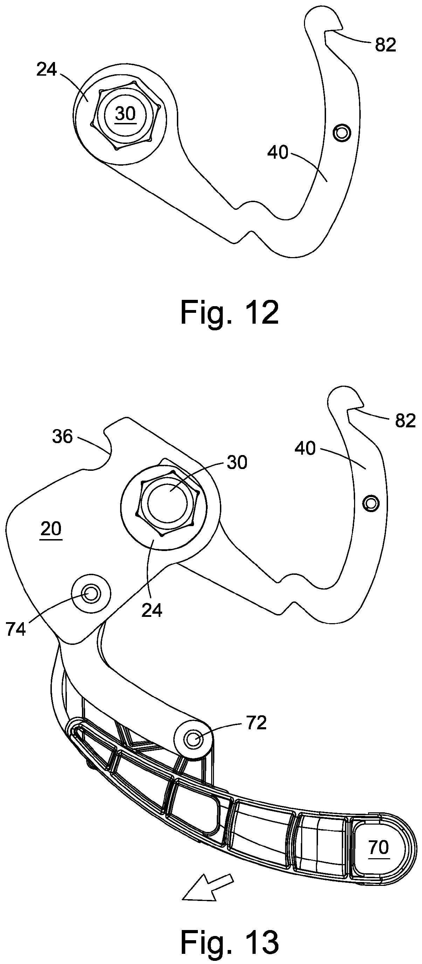

Referring to Fig. 13, disengagement of the clamping force will now be described. The first step is counter-rotation of the clamping lever 40 In the opposite direction, i.e. anticlockwise in the drawings, and against the action of the bias spring 32A. This counter-rotation translates bearing 24 away from the movable cup 14 and therefore removes the clamping force applied to the cup by the cam 20. In the present embodiment, counter rotation of the clamping lever 40 is achieved by rotating the rack 50 in the same direction, i.e. anti-clockwise. A locking tab 80 connected to the rack 50 engages with a claw 82 in the distal end of the clamping lever 40 to ensure that anticlockwise rotation of the rack 50 causes corresponding rotation of the clamping lever 40. Once the clamping force applied by the cam 20 to the movable cup 14 has been removed, the cam 20 must be rotated anti-clockwise to remove the initial engaging force which it applies to the movable cup by virtue of the bias spring 32. A pull handle 70 is rigidly mounted to the to the cam 20 by means of rivets 72 and 74. Rotation of the pull handle 70 In an anti-clockwise sense rotates the whole assembly of cam 20 and handle 70 around the bearing 24, against the action of the bias from spring 32. Because this rotating, 'disengaging' force acts substantially in the direction of the frictional forces which resist motion of the cam 20 relative to the rear face 14A of the movable cup 14, it acts only to disengage the cam 20 and barrel 34; whereas any non-parallel force would also act to increase the force with which the cam 20 bears against the barrel 34 and therefore would be simultaneously acting to increase the very force it is intended to overcome. Accordingly, the force applied by the pull handle can be sufficient to rotate the cam 20 slightly out of engagement with the movable cup 14 then to enable rotation of the clamping lever anti-clockwise to remove both the clamping and the initial engagement force between the cam 20 and the barrel 34 to a sufficient degree that the biasing spring 28 may then urge the movable cup 14 to rotate back away from the ball T about the pivot 16 to a sufficient extent then to until the barrel 34 and slot 36 forming the detent have come into engagement once more.

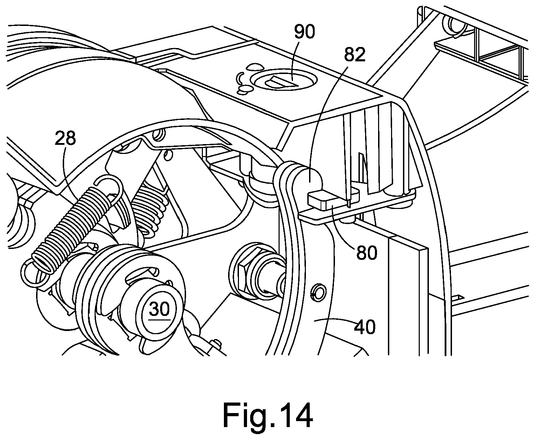

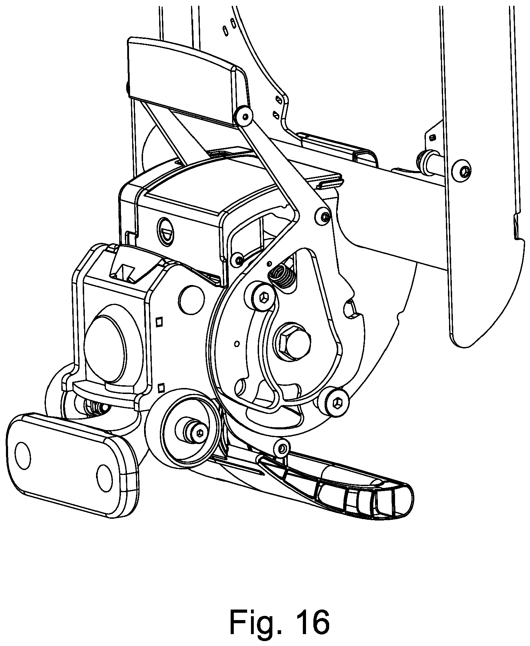

As mentioned previously, rotation of the clamping lever 40 to disengage the cam 20 and movable cup 14 is achieved by upward rotation of the rack 50 which causes the lever 40 to rotate with it. However, the rack 50 may also be rotated anti-clockwise about the axle 30 independently of the clamping lever 40. This permits the rack 50 to be folded upwards while the base 10 remains engaged with the ball T. Referring now to Fig. 14, a lock tab 80 is engaged by the claw 82 at the distal end of the clamping lever 40. When engaged, the lock tab causes the clamping lever 40 to rotate with the rack 50 in an anti-clockwise direction about the axle 30. Disengagement of the lock tab 80 to cause it to pivot out of engagement with the claw 82 permits rotation of the rack 50 anti-clockwise about the axle 30 independently of the clamping lever and therefore ensures that the carrier remains engaged with the ball T. In the illustrated embodiment this disengagement is undertaken by means of a key lock 90. This therefore provides an additional security feature since, where engagement and disengagement of the pull tab 80 with the lever claw 82 is only achievable with keys, the carrier cannot be removed from the ball T without those keys, since the keys are required in order to enable the engagement of the pull tab 80 and claw 82 which is necessary to allow rotation of the rack 50 to rotate the lever 40. Fig. 16 shows the carrier, still enaged with the ball T and in its upright position.

## Claims

1. A carrier comprising
a base (10) which is to be clampable to a ball (T) of a tow-bar on a vehicle and upon which the weight of items to be carried will, in use, bear;
first and second clamping cups (12, 14) mounted on the base (10) in a manner permitting relative movement of the cups (12, 14) in at least a clamping direction thereby enabling (a) the cups (12, 14) to engage with the ball (T) and provide a clamping force to retain the base (10) on the ball (T) and (b) the cups (12, 14) to disengage from the ball (T) and enable removal of the base (10) from the ball (T);
a cam (20) which is pivotally mounted for rotation about a first axis (A1) between first and second positions in which, respectively, a surface (22) on the cam is engaged and disengaged with one of the clamping cups (14);
a lever (40) which is pivotally mounted to base for rotation about a second axis (A2) whose location is fixed relative to one of the first clamping cup and base (14; 12);
the first axis (A1) being located (a) on a pivot member (24) rotatable with the lever (40) and (b) eccentrically with respect to the second axis (A2);
**characterised in that**:
rotation of the lever (40) about the second axis (A2) translates the first axis (A1) relative to the first cup (12), thereby causing the cam (20) to apply a clamping force urging the second cup (14) into engagement with the ball (T).

2. A carrier according to claim 1 wherein the pivot member is an axle journalled for rotation relative to the base and defining the second axis and a bush mounted eccentrically on the axle defines the first axis and provides rotation of the cam about the first axis.

3. A carrier according to claim 1 or claim 2 further comprising a rack which is mounted upon the base for rotation relative to the base about the second axis.

4. A carrier according to claim 3 wherein the rack is mounted for rotation relative to base in a manner enabling independent rotation of the rack and lever relative to base about the second axis.

5. A carrier according to any one of the preceding claims wherein the first cup is fixedly mounted to the base and the second cup is pivotally mounted on base.

6. A carrier according to any one of the preceding claims wherein the second cup is biased into a disengaged position by a biasing means.

7. A carrier according to any one of the preceding claims wherein the outer surface of the second cup has at least one cam reaction surface against which the cam surface is engageable and which reaction surface is planar in a plane coincident with the first axis.

8. A carrier according to any one of the preceding claims further comprising a cam bias which biases rotation of the cam into engagement with the engagement surface on the second cup and thereby to bias the cam to urge the second cup into engagement with the tow ball.

9. A carrier according to any one of the preceding claims wherein a lug member connected to the second cup is engagable with a detent on the cam to retain the second cup in the disengaged position against the action of the cam bias.

10. A carrier according to claim 9 wherein the lug member has a surface which extends transversely to at least a part of the detent on the cam.

11. A carrier according to claim 3 and any one of claims 4 to 10 as dependent upon claim 4, wherein the rack is engageable with the lever in a first direction of rotation such that rotation of the base into an operating position in which it can carry items causes rotation of the lever to apply the clamping force and disengageable with the lever in a second direction of rotation such that, when the clamping force is applied, rotation of the rack from an operating position to a storage position does not reduce the clamping force.

## Patentansprüche

1. Träger, umfassend
eine Basis (10), die auf eine Kugel (T) einer Anhängerkupplung auf einem Fahrzeug klemmbar ist und auf der im Gebrauch das Gewicht von zu transportierenden Gegenständen gelagert ist;
erste und zweite Klemmkalotten (12, 14), die auf der Basis (10) derart angebracht sind, dass eine Relativbewegung der Kalotten (12, 14) in mindestens eine Klemmrichtung ermöglicht ist, wodurch (a) die Kalotten (12, 14) mit der Kugel (T) in Eingriff gelangen können und eine Klemmkraft bereitstellen, um die Basis (10) auf der Kugel (T) zu halten, und (b) die Kalotten (12, 14) von der Kugel (T) gelöst werden können und die Basis (10) von der Kugel (T) entfernt werden kann;
ein Nocken (20), der zur Rotation um eine erste Achse (A1) zwischen einer ersten und einer zweiten Position schwenkbar angebracht ist, in denen jeweils eine Oberfläche (22) des Nockens mit einer der Klemmkalotten (14) in Eingriff bzw. außer Eingriff gebracht ist;
ein Hebel (40), der zur Rotation um eine zweite Achse (A2), deren Position relativ zu einem der ersten Klemmkalotte und der Basis (14; 12) fixiert ist, schwenkbar auf der Basis angebracht ist;
wobei die erste Achse (A1) (a) auf einem Schwenkelement (24) angeordnet, das mit dem Hebel (40) schwenkbar ist, und (b) in Bezug auf die zweite Achse (A2) exzentrisch ist;
**dadurch gekennzeichnet, dass**
die Rotation des Hebels (40) um die zweite Achse (A2) die erste Achse (A1) relativ zur ersten Kalotte (12) versetzt, was bewirkt, dass der Nocken (20) eine Klemmkraft beaufschlagt, die die zweite Kalotte (14) mit der Kugel (T) in Eingriff treibt.

2. Träger nach Anspruch 1, wobei das Schwenkelement eine Welle ist, die zur Rotation relativ zur Basis gelagert ist und die zweite Achse definiert, und wobei eine Buchse, die exzentrisch auf der Achse angebracht ist, die erste Achse definiert und die Rotation des Nockens um die erste Achse bereitstellt.

3. Träger nach Anspruch 1 oder 2, ferner umfassend einen Rahmen, der zur Rotation relativ zur Basis um die zweite Achse auf der Basis angebracht ist.

4. Träger nach Anspruch 3, wobei der Rahmen zur Rotation relativ zur Basis derart angebracht ist, dass unabhängiges Rotieren des Rahmens und des Hebels relativ zur Basis um die zweite Achse möglich ist.

5. Träger nach einem der vorhergehenden Ansprüche, wobei die erste Kalotte fest auf der Basis angebracht ist und die zweite Kalotte schwenkbar auf der Basis angebracht ist.

6. Träger nach einem der vorhergehenden Ansprüche, wobei die zweite Kalotte durch ein Vorspannelement in eine Außer-Eingriff-Position vorgespannt ist.

7. Träger nach einem der vorhergehenden Ansprüche, wobei die Außenfläche der zweiten Kalotte mindestens eine Nockenreaktionsfläche aufweist, mit der die Nockenoberfläche in Eingriff bringbar ist, und welche Reaktionsfläche in einer Ebene, die mit der ersten Achse übereinstimmt, planar ist.

8. Träger nach einem der vorhergehenden Ansprüche, ferner umfassend ein Nockenvorspannelement, das die Rotation des Nockens in Eingriff mit der Eingriffsfläche auf der zweiten Kalotte vorspannt und somit den Nocken vorspannt, um die zweite Kalotte mit der Anhängerkupplungskugel in Eingriff zu treiben.

9. Träger nach einem der vorhergehenden Ansprüche, wobei ein Rastnasenelement, das mit der zweiten Kalotte verbunden ist, mit einer Arretierung auf dem Nocken in Eingriff bringbar ist, um die zweite Kalotte in der Außer-Eingriff- Position gegen die Wirkung des Nockenvorspannelements zurückzuhalten.

10. Träger nach Anspruch 9, wobei das Rastnasenelement eine Oberfläche aufweist, die sich transversal bis zu mindestens einem Teil der Arretierung auf dem Nocken erstreckt.

11. Träger nach Anspruch 3 und einem der von Anspruch 4 abhängigen Ansprüche 4 bis 10, wobei der Rahmen mit dem Hebel in eine erste Rotationsrichtung in Eingriff bringbar ist, so dass die Rotation der Basis in eine Betriebsposition, in der sie Gegenstände tragen kann, eine Rotation des Hebels bewirkt, um die Klemmkraft zu beaufschlagen, und mit dem Hebel in eine zweite Rotationsrichtung außer Eingriff bringbar ist, so dass, wenn die Klemmkraft beaufschlagt wird, die Klemmkraft bei Rotation des Rahmens von einer Betriebsposition in eine Lagerungsposition nicht verringert wird.

## Revendications

1. Dispositif de transport, comprenant
une base (10) qui peut être serrée sur une boule (T) d'une barre de remorquage sur un véhicule et sur laquelle le poids des articles à transporter portera en utilisation ;
des première et seconde coupelles de serrage (12, 14) montées sur la base (10) de manière à permettre un mouvement relatif des coupelles (12, 14) dans au moins une direction de serrage, en permettant ainsi (a) aux coupelles (12, 14) de venir en prise avec la boule (T) et de fournir une force de serrage pour retenir la base (10) sur la boule (T), et (b) aux coupelles (12, 14) de se désengager de la boule (T) et de permettre le retrait de la base (10) à partir de la boule (T) ;
une came (20) qui est montée pivotante autour d'un premier axe (A1) entre des première et seconde positions dans lesquelles, respectivement, une surface (22) de la came est mise en prise avec et désengagée de l'une des coupelles de serrage (14) ;
un levier (40) qui est monté de manière pivotante sur la base pour une rotation autour d'un second axe (A2) dont l'emplacement est fixe par rapport à l'une de la première coupelle de serrage et de la base (12 ; 10) ;
le premier axe (A1) étant situé (a) sur un élément pivot (24) pouvant tourner avec le levier (40) et (b) de manière excentrée par rapport au second axe (A2) ;
**caractérisé en ce que** :
une rotation du levier (40) autour du second axe (A2) déplace le premier axe (A1) en translation par rapport à la première coupelle (12), en amenant ainsi la came (20) à appliquer une force de serrage sollicitant la seconde coupelle (14) en prise avec la boule (T).

2. Dispositif de transport selon la revendication 1, dans lequel l'élément pivot est un essieu tourillonné pour une rotation par rapport à la base et définissant le second axe, et un manchon monté de manière excentrée sur l'essieu définit le premier axe et permet une rotation de la came autour du premier axe.

3. Dispositif de transport selon la revendication 1 ou la revendication 2, comprenant en outre une crémaillère qui est montée sur la base pour une rotation par rapport à la base autour du second axe.

4. Dispositif de transport selon la revendication 3, dans lequel la crémaillère est montée pour une rotation par rapport à la base d'une manière permettant une rotation indépendante de la crémaillère et du levier par rapport à la base autour du second axe.

5. Dispositif de transport selon l'une quelconque des revendications précédentes, dans lequel la première coupelle est montée de manière fixe sur la base et la seconde coupelle est montée de manière pivotante sur la base.

6. Dispositif de transport selon l'une quelconque des revendications précédentes, dans lequel la seconde coupelle est sollicitée dans une position désengagée par un moyen de rappel.

7. Dispositif de transport selon l'une quelconque des revendications précédentes, dans lequel la surface externe de la seconde coupelle comporte au moins une surface de réaction de came contre laquelle la surface de came peut venir en prise, et laquelle surface de réaction est plane dans un plan coïncidant avec le premier axe.

8. Dispositif de transport selon l'une quelconque des revendications précédentes, comprenant en outre un dispositif de sollicitation de came qui sollicite une rotation de la came en prise avec la surface de mise en prise sur la seconde coupelle, et pour ainsi solliciter la came à pousser la seconde coupelle en prise avec la boule de remorquage.

9. Dispositif de transport selon l'une quelconque des revendications précédentes, dans lequel un élément ergot relié à la seconde coupelle peut être mis en prise avec un cran sur la came pour retenir la seconde coupelle dans la position désengagée à l'encontre de l'action du dispositif de sollicitation de came.

10. Dispositif de transport selon la revendication 9, dans lequel l'élément ergot a une surface qui s'étend transversalement à au moins une partie du cran sur la came.

11. Dispositif de transport selon la revendication 3 et l'une quelconque des revendications 4 à 10 lorsque dépendante de la revendication 4, dans lequel la crémaillère peut être mise en prise avec le levier dans une première direction de rotation de sorte qu'une rotation de la base dans une position de fonctionnement dans laquelle elle peut porter des articles provoquent une rotation du levier pour appliquer la force de serrage, et peut être désengagée du levier dans une seconde direction de rotation de telle sorte que lorsque la force de serrage est appliquée, une rotation de la crémaillère d'une position de fonctionnement à une position de stockage ne réduit pas la force de serrage.
